# EUROPÄISCHE PATENTANMELDUNG

(11) **EP 1 151 821 A2**
(43) Veröffentlichungstag der Anmeldung: **07.11.2001**
(21) Anmeldenummer: 01110774.5
(22) Anmeldetag: 03.05.2001
(51) Int. Cl.: B23P 19/06, B25B 23/14

(54) **Schraubsystem**

(30) Priorität: 03.05.2000 DE 20007904 U
(71) Anmelder: Cooper Power Tools GmbH & Co., 73461 Westhausen (DE)
(72) Erfinder: Foitzik, Thomas Dipl.-Ing.(FH), 73491 Neuler (DE); Kaminski, Ulrich, 73566 Bartholomä (DE); Polzer, Bernhard, 73469 Riesbürg-Pflaumloch (DE)
(74) Vertreter: Grünecker, Kinkeldey, Stockmair & Schwanhäusser Anwaltssozietät

(57) **Zusammenfassung**

Ein Schraubsystem weist eine Vielzahl von Schraubern und diesen jeweils zugeordneten, separaten Motorsteuer- und Messeinrichtungen sowie eine Stationssteuereinrichtung auf. Diese ist mit wenigstens Motorsteuer-, Mess- und einer Interfaceeinrichtung verbunden. Jeder Schrauber übermittelt an seine Messeinrichtung zumindest Drehmoment und/oder Drehwinkel entsprechende Signale.

Um die Anzahl der Einzelteile des Schraubsystems und den Verkabelungs- oder Verbindungsaufwand bei erheblicher Kostenreduzierung zu vermindern und gleichzeitig den Aufwand bei der Programmierung beziehungsweise der Vorgabe bestimmter SollWerte für insbesondere Drehmoment und/oder Drehwinkel für die verschiedenen Schrauber des Schraubsystems zu reduzieren, sind Motorsteuer- und Messeinrichtung in einem Schraubmodul integriert, welches eine Interfaceeinrichtung zur Verbindung zumindest mit der Stationssteuereinrichtung aufweist.

## Beschreibung

Die Erfindung betrifft ein Schraubsystem mit einer Vielzahl von Schraubern und diesen jeweils zugeordneten, separaten Motorsteuer- und Messeinrichtungen sowie einer Stationssteuereinrichtung, die mit wenigstens Motorsteuer-, Mess- und einer Interfaceeinrichtung verbunden ist, wobei jeder Schrauber an seine Messeinrichtung zumindest Drehmoment und/oder Drehwinkel entsprechende Signale übermittelt.

Ein solches Schraubsystem ist aus der DE 42 43 069 A1 bekannt. Bei diesem vorbekannten Schraubsystem ist ein elektrisch oder pneumatisch angetriebenes Schraubwerkzeug über eine entsprechende Versorgungsleitung mit einer Motorsteuereinrichtung und über eine entsprechende Signalleitung mit einer Messeinrichtung verbunden. An die Messeinrichtung werden zur Drehmoment- und Drehwinkelerfassung entsprechende Daten von dem Schraubwerkzeug übermittelt. Die Messeinrichtung ist mit einer Mess-/Steuerelektronik verbunden, an der die entsprechend erfassten Daten ablesbar sind und durch die beispielsweise Soll-Werte für Drehmoment und Drehwinkel zum Erreichen einer Schraubverbindung mit gewünschter Qualität vorgegeben sind. Die Daten der Mess-/Steuerelektronik sind über ein Interface ausdruckbar, beziehungsweise können an übergeordnete Rechner zur Qualitätsdatenarchivierung oder Auswertung zur Verfügung gestellt werden.

Das vorbekannte Schraubsystem weist bei einer Vielzahl von Schraubern oder Schraubwerkzeugen eine entsprechend große Anzahl separater Motorsteuer- und Messeinrichtungen sowie diesen zugeordnete Stationssteuereinrichtungen auf. Der Aufwand an separaten Einrichtungen ist groß wie auch der Aufwand zur Verbindung der verschiedenen Einrichtungen miteinander, mit den Schraubern und mit entsprechenden Mess-/Steuerelektroniken als Stationseinrichtungen. Weiterhin ist der Aufwand zur Programmierung der verschiedenen Stationseinrichtungen und damit zur Steuerung eines jeden Schraubers sehr hoch und zeitaufwendig.

Dem erfindungsgemäßen Schraubsystem liegt daher die Aufgabe zugrunde, die Anzahl der Einzelteile des Schraubsystems und den Verkabelungs- oder Verbindungsaufwand bei erheblicher Kostenreduzierung zu vermindern und gleichzeitig den Aufwand bei der Programmierung bzw. der Vorgabe bestimmter Soll-Werte für insbesondere Drehmoment und/oder Drehwinkel für die verschiedenen Schrauber des Schraubsystems zu reduzieren.

Diese Aufgabe wird erfindungsgemäß im Zusammenhang mit den Merkmalen des Schraubsystems nach dem Oberbegriff des Anspruchs 1 dadurch gelöst, dass Motorsteuer- und Messeinrichtung für jeden Schrauber in einem Schraubmodul integriert sind, welches eine Interfaceeinrichtung zur Verbindung zumindest mit der Stationssteuereinrichtung aufweist.

Auf diese Weise ist jedem Schrauber ein bestimmtes Schraubmodul zugeordnet und mit diesem über entsprechende Versorgungs- und Datenleitungen verbunden. Die Weitergabe der Daten erfolgt über die Interfaceeinrichtung des Schraubmoduls an die entsprechende Stationssteuereinrichtung, wobei zumindest die Ansteuerung der Motorsteuereinrichtung von der Stationssteuereinrichtung her erfolgt. Das Schraubmodul ist einfach handhabbar und eine getrennte elektrische Versorgung oder Steuerung von Motorsteuer- und Messeinrichtung ist nicht mehr notwendig. Statt dessen erfolgt von einer Stationssteuereinrichtung her die Überwachung und Steuerung einer Mehrzahl von Schraubmodulen über die entsprechende Interfaceeinrichtung eines jeden Schraubmoduls, wobei jedes Schraubmodul nur noch eine zentrale Stromversorgung aufweist.

Um in einfacher Weise eine Anpassung des Schraubmoduls an Schrauber mit beispielsweise unterschiedlichen Messwertaufnehmern, anderen Kennlinien- und Kenndaten oder dgl. durchzuführen, kann die Messeinrichtung eine in das Schraubmodul einsteckbare Messkarte sein. Diese ist einfach einsetzbar und in ihrer eingesetzten Stellung beispielsweise durch Verschrauben im Schraubmodul befestigbar. Ebenso ist es möglich, dass auch die Schraubmodule bei ansonsten gleichen äußeren Abmessungen im Hinblick auf die Motorsteuereinrichtung an beispielsweise Schraubergröße und Art des Schraubers anpassbar sind.

Um die Schraubmodule sicher und in einfacher Weise unterbringen zu können, kann eine Mehrzahl von Schraubmodulen in einem Schaltschrank montierbar sein, wobei diesem eine Stationssteuereinrichtung zugeordnet sein kann. Die Schraubmodule sind beispielsweise an einer Montageplatte des Schaltschrankes durch Schlüssellöcher oder dgl. befestigbar. Bevorzugt kann die Montageplatte verzinkt sein.

Die einer solchen Mehrzahl von Schraubmodulen insbesondere in einem Schaltschrank zugeordnete Stationssteuereinrichtung kann in einer größeren Entfernung zu den Schraubmodulen angeordnet sein, wobei auch mehrere solcher Schaltschränke nur einer Stationssteuereinrichtung zugeordnet sein können. Um die räumliche Zuordnung zu einer Anzahl bestimmter Schraubmodule in einfacher Weise zu ermöglichen und gleichzeitig die Stationssteuereinrichtung einfach betätigen zu können, kann die Stationssteuereinrichtung in einer Tür des Schaltschrankes integriert sein.

Zur Inbetriebnahme, zur Netzwerkanbindung sowie beispielsweise zum Datenaustausch kann die Stationssteuereinrichtung die wenigstens eine Interfaceeinrichtung zum Anschluss eines Ein- und/oder Ausgabegerätes, wie Computer, Maus, Strichcode-Lesegerät, Drucker oder dgl. aufweisen. Durch den Drucker kann beispielsweise ein Arbeitsprotokoll für einen oder mehrere Schrauber ausgegeben werden, dem Einsatzzeit, Verschraubungsanzahlen, Drehmoment beim Verschrauben, dem jeweiligen Drehmoment zugeordneter Drehwinkel oder dgl. entnehmbar ist. Zur Datenzuordnung in der Stationssteuereinrichtung kann beispielsweise das Strichcode-Lesegerät dienen, welches zentral an der Stationssteuereinrichtung oder dezentral an den Schraubmodulen angeschlossen werden kann. Über einen solchen Strichcode wird der Werkstücktyp eingelesen, wobei in der Stationssteuereinrichtung für die verschiedenen Typen von Werkstücken entsprechende Parameter oder dgl. abgespeichert sein können. Über die Stationssteuereinrichtung oder einen PC kann eine Inbetriebnahme und insbesondere die Programmierung erfolgen.

Die Stationssteuereinrichtung kann wenigstens ein Steuermodul und eine Programmierungseinrichtung mit Bildschirm aufweisen. In diesem Fall sind einige Funktionen der Stationssteuereinrichtungen separiert. Das Steuermodul wird beispielsweise für Steuer- und Kommunikationsaufgaben eingesetzt, wobei dessen mechanischer Aufbau ähnlich dem des Schraubmoduls sein kann. Das Steuermodul ist auch in dem vorangehend erwähnten Schaltschrank anordbar und über eine entsprechende Netzwerkverbindung, wie ARCNET oder dergleichen verbindbar. Die Programmierungseinrichtung kann ein üblicher, insbesondere tragbarer Computer sein, der zur Bedienung und Programmierung insbesondere des Steuermoduls dient und mittels dessen Bildschirm Prozessvisualisierungen, wie Abruf von Werten, Auswertekurven oder dergleichen, möglich ist. Das Steuermodul kann in diesem Zusammenhang über die üblichen Schnittstellen (Centronics, ETHERNET, ARCNET oder dergleichen) verfügen, um entsprechende Eingabe- und Ausgabegeräte außer der vorangehend genannten Programmierungseinrichtung anzuschließen. Insbesondere ist beispielsweise eine Verbindung mit einem Server möglich, der Teil eines betriebsinternen Netzwerksystems sein kann. Dieser Server kann zur Parametrisierung, Prozessdatenarchivierung, zum Datenaustausch, zur statistischen Analyse von Daten und dergleichen dienen. Die Kommunikation mit dem Server oder weiteren mit dem Server in Verbindung stehenden Clients oder dergleichen kann mittels TCP/IP erfolgen. Schließlich kann über beispielsweise eine ARCNET-Verbindung die Kommunikation mit sogenannten Gateways erfolgt, die Zugriff auf andere Netzwerke ermöglichen, die mit anderen Übertragungsprotokollen arbeiten. Dadurch ist beispielsweise auch eine Kommunikation über das Internet mit Herstellern von Schraubsystemkomponenten oder wiederum ein Zugriff auf das Schraubsystem über ein betriebsinternes Netzwerk möglich.

Ein weiterer Datenaustausch zwischen Stationssteuereinrichtung und Peripheriegeräten kann beispielsweise durch ein Eingabegerät für mobile Datenträger, wie ein Diskettenlaufwerk oder ein CD-Laufwerk erfolgen. Um bestimmte Funktionen des Schraubsystems direkt aufzurufen, Bedien- und Eingabezeiten zu reduzieren, auf eine Maus zur Bedienung der Stationssteuereinrichtung zu verzichten und dgl. kann die Stationssteuereinrichtung einen insbesondere berührungsempfindlichen Bildschirm und/oder eine Tastatur aufweisen. Ein solcher Bildschirm kann eine Farb-LCD-Anzeige hinter einem sogenannten Touch-screen sein. Entsprechende "Icons" auf dem Bildschirm ermöglichen die Auswahl von Funktionen des Schraubsystems. Außerdem können Diagnoseprogramme abrufbar und durch Auswahl eines entsprechenden Icons gestartet werden.

Durch die Bereitstellung von Fest- und/oder wiederbeschreibbaren Speicherelementen in der Stationssteuereinrichtung können außerdem verschiedene Schraubabläufe durch die Schrauber auswählbar sein. Es können verschiedene Anzugsverfahren pro Schraubablauf realisiert werden, d.h. softwaremäßig können alle gängigen Drehmoment-, Drehwinkel- und Streckgrenzschraubverfahren programmiert und kombiniert werden.

Weitere durch die Stationssteuereinrichtung realisierbare Einsätze sind Fehlermeldungen im Klartext, Servicemeldungen für vorbeugende Instandhaltung, Systemwarnungen, integrierte Statistik-Software, grafische Darstellung von Drehmoment und Gradient über Anzieh-Winkel oder Zeit, On-line-Hilfe und dgl.

Um Motorsteuer- und Messeinrichtung vor äußeren Einflüssen gut schützen zu können, kann das Schraubmodul ein Gehäuse aufweisen, an dem zur Kommunikation mit der Stationssteuereinrichtung und dem wenigstens einen zuordbaren Schrauber Anschlüsse für einen insbesondere seriellen Hochgeschwindigkeits-Feldbus und für entsprechende Messwertaufnehmer und Antriebseinrichtungen des Schraubers angeordnet sind. Die Gehäuse weisen bevorzugt alle die gleichen Abmessungen auf, so dass sie in einfacher Weise mechanisch miteinander oder innerhalb des bereits genannten Schaltschrankes befestigbar sind. Das Gehäuse ist bevorzugt eine stabile und EMV-geprüfte Metallkassette. Über den Feldbus erfolgt ein schneller Datenaustausch mit der Stationssteuereinrichtung, wobei ein solcher Feldbus ein sogenannter Hochleistungs-Feldbus wie ARCNET oder dgl. sein kann. Das Gehäuse weist weitere Anschlüsse für den oder die Messwertaufnehmer, die Spannungsversorgung des Schraubmoduls und des Schraubers auf. Die vorangehenden Ausführungen sowie die folgenden Ausführungen zum Aufbau des Schraubmoduls gelten analog für das Steuremodul.

Die Netzwerkteilnehmer (wie z.B. Schraubmodule, Stationssteuereinrichtung, Steuermodule, Programmierungseinrichtung, Busankopplungsmodule etc.) können über Linien-, Stern-, oder Baumtopologie miteinander verbunden sein.

Um ein schnelles Anschließen des Schraubers am Schraubmodul zu ermöglichen, können alle insbesondere steckbaren Anschlüsse des Schraubmoduls an einer Frontseite des Gehäuses ausgebildet sein. Dadurch ist gleichzeitig schnell feststellbar, welches Schraubmodul bereits im Einsatz ist und mit welchem Schrauber es verschaltet ist.

Um beispielsweise eine codierte Fehlerinformation am Schraubmodul sowie andere Statusanzeigen zu ermöglichen, kann das Schraubmodul eine zumindest numerische Anzeigeeinrichtung und/oder Anzeigeelemente in Form beispielsweise von LED's aufweisen. Die numerische Anzeigeeinrichtung kann durch ein zweistelliges Sieben-Segment-Display realisiert sein. Die Anzeigeelemente können beispielsweise eine Busaktivität, eine Betriebsbereitschaft des Schraubmoduls oder andere Betriebszustände anzeigen.

Um mit dem Schraubmodul sowohl direkt vom Netz versorgbare als auch eine dreiphasige Versorgung benötigende Schrauber bedienen zu können, kann das Schraubmodul entsprechend einen Ein-Phasen-Netzanschluss und/oder einen Drei-Phasen-Netzanschluss aufweisen. Die Motorsteuereinrichtung kann dabei so ausgebildet sein, dass beide Anschlüsse alternativ oder auch gleichzeitig vorgesehen sind.

Um im Falle eines Not-AUS nur die Motorsteuereinrichtung abzuschalten und beispielsweise die Messeinrichtung und zur Kommunikation benötigte Baugruppen weiterzuversorgen, können Steuer- und Messeinrichtung im Schraubmodul separat elektrisch versorgbar und/oder abschaltbar sein. Dadurch bleiben alle Schaltungsteile, die nicht direkt zur Versorgung des Schraubers dienen, einsatzbereit.

In der Regel ist keine Fremdbelüftung, z.B. mit Einschublüftern, für Schraubmodule in einem Schaltschrank erforderlich, da das gesamte Modulgehäuse als Kühlkörper dient. Um allerdings die Temperatur im jeweiligen Schraubmodul zu dessen Betrieb berücksichtigen zu können, kann das Schraubmodul einen Temperatursensor im Modulgehäuse aufweisen.

Um eine dezentrale Ankopplung der Schraubmodule und der Stationssteuereinrichtung an unterschiedliche Schnittstellen zu ermöglichen, kann das Schraubsystem wenigstens eine Busankoppeleinrichtung aufweisen. Diese ist einerseits mit dem Hochgeschwindigkeits-Feldbus verbunden und dient andererseits beispielsweise zum Ankoppeln frei konfigurierbarer, digitaler Ein-/Ausgänge an ein Interbus-S-Netzwerk, an ein Profibus-DP-Netzwerk oder dgl.

Bei einem einfachen Ausführungsbeispiel kann die Busankoppeleinrichtung an im Schaltschrank vorgesehenen Tragprofilschienen anordbar und insbesondere aufschnappbar sein.

Um auch die Busankoppeleinrichtung in einfacher Weise anzuschließen, Fehler festzustellen oder Betriebszustände sichtbar zu machen, kann die Busankoppeleinrichtung alle ihre Anschlüsse und/oder Anzeigeelemente und/oder Adressiereinrichtungen und/oder zumindest eine numerische Anzeigeeinrichtung auf einer der Tragprofilschiene abgewandten Frontseite aufweisen.

Wird ein Schrauber mit einem bürstenlosen Motor eingesetzt, so kann das Schraubmodul in günstiger Weise einen Anschluss für einen Resolver dieser Antriebseinrichtung und des Schraubers aufweisen.

Um die Leistung des Schraubmoduls zu erhöhen, kann dieses separate Prozessoreinrichtungen für Motorsteuer- und Messeinrichtung aufweisen.

Zur verbesserten Steuerung einer Antriebseinrichtung des jeweiligen Schraubers kann die Motorsteuereinrichtung des Schraubmoduls eine digitale Motorregelung aufweisen.

Um Regelparameter für die Antriebseinrichtung des Schraubers, verschiedene mehrstufige Schraubabläufe und verschiedene Schraubverfahren sowie andere Daten im Schraubmodul speichern zu können, können dieses und/oder die Messkarte wenigstens eine Speichereinrichtung aufweisen. Solche Speichereinrichtungen sind beispielsweise ein Flash-Memory-Baustein, der insbesondere von der Stationssteuereinrichtung mit Mess-Software nachladbar ist, ein SRAM, ein DPR (dual port RAM) oder dgl. Das Schraubmodul kann auch selbständig autark Schraubprozesse durchführen und protokollieren.

Um die Schraubmodule vom hohen statischen Spannungen zu schützen, können alle Steckverbindungsanschlüsse und Gehäuseöffnungen des Schraubmoduls berührsicher ausgebildet sein.

Stromspitzen beim Einschalten und eine dadurch bedingte Überlastung des Versorgungsnetzes sind dadurch verhinderbar, dass das Schraubmodul vorzugsweise eine Einschaltstrombegrenzungseinrichtung aufweist. Diese kann beispielsweise durch zwei von der Prozessoreinrichtung gesteuerte Relais gebildet sein.

Um Daten von wenigstens zwei Messwertaufnehmem im Schraubmodul empfangen und gegebenenfalls auswerten zu können, wobei ein Messwertaufnehmer redundant zum andern sein kann, kann die entsprechende Messeinrichtung wenigstens zwei getrennte Messkanäle für Drehmoment- und Drehwinkelerfassung oder eine andere Vorspannkraftmessung durch Messwertaufnehmer des Schraubers aufweisen. Eine entsprechende Messabtastrate kann 5000 Messungen pro Sekunde bei beispielsweise einer Auflösung von 12 Bit bei ± 10 V betragen. Für die Drehmomentmesssignale kann ein analoger Filter vorgesehen sein.

Es besteht ebenfalls die Möglichkeit, dass Resolversignale zur Generierung von Motorwinkelsignalen verwendet werden. Diese werden dann von der Motorsteuereinrichtung an die Messeinrichtung übertragen.

Um jedes Schraubmodul bei dessen Installation zu individualisieren, kann das Schraubmodul eine einstellbare Adressiereinrichtung zur Identifizierung über den Feldbus aufweisen. Eine solche Adressiereinrichtung kann durch zwei BCD (binary coded digitt)-Codierschalter gebildet sein, von denen einer für eine Zehnerstelle und der andere für eine Einerstelle steht. Die eingestellte Adresse kann an der Anzeigeeinrichtung des Schraubmoduls darstellbar sein.

Zum Betrieb der Antriebseinrichtung des Schraubers sowie des entsprechenden, im Schraubmodul vorhandenen Servoverstärkers als Teil der Motorsteuereinrichtung und zu deren Schutz vor Überspannungen, kann vorteilhafterweise zumindest die Motorsteuereinrichtung eine Spannungsbegrenzungs- und/oder Spannungsregeleinrichtung aufweisen.

Um ein fehlerhaftes Einstecken beispielsweise eines Steckers zur Spannungsversorgung des Schraubmoduls in einen Anschluss zur Versorgung der Antriebseinrichtung und des Schraubers zu verhindern, können die Anschlüsse am Schraubmodul zumindest teilweise steckercodiert sein. Es ist auch möglich, dass die Motore über elektronische Kenngrößen direkt erkannt werden und vom Schraubmodul selbständig richtig betrieben werden.

Um alle internen Funktionen des Schraubmoduls in einfacher Weise rücksetzen zu können, kann am Schraubmodul eine Rücksetztaste angeordnet sein. Diese führt zu einem Reset der Prozessoreinrichtung. Weiterhin kann die Rücksetztaste zum Quittieren von aufgetretenen Störungen oder zu einer Neukonfiguration aller Funktionen nach ihrer Betätigung dienen.

Bei bestimmten Antriebseinrichtungen des Schraubers mit einem negativen Temperaturkoeffizienten eines Magnetmaterials ist es notwendig, dass die Temperatur der Antriebseinrichtung erfasst wird, um eine Drehmomentabnahme der Antriebseinrichtung bei Erwärmung zu kompensieren. Ein solcher Temperatursensor ist dem Schrauber und insbesondere dessen Antriebseinrichtung zugeordnet. Die Signale des Temperatursensors sind an das Schraubmodul übermittelbar. In dem Schraubmodul wird das Sensorsignal ausgewertet und ein gemessener Strom-lst-Wert entsprechend zur gemessenen Temperatur in einen korrigierten Strom-Ist-Wert umgerechnet und anschließend der gemessene und korrigierte Strom-Ist-Wert an die Messeinrichtung übergeben. Eine entsprechende Drehmomentkompensationseinrichtung ist folglich durch Bauteile der Motorsteuereinrichtung gebildet, die den korrigierten Strom-Ist-Wert berechnen, sowie Bauteile der Messeinrichtung, die eine Erhöhung des korrigierten Strom-Ist-Wertes auf einen entsprechenden Soll-Wert zur Drehmomentkompensation veranlassen.

Innerhalb des Schraubmoduls sind Spannungen verschiedener Vorzeichen und Größen erforderlich. Um das Schraubmodul von außen nur mit einer festen Spannungsversorgung zu verbinden, kann das Schraubmodul intern eine Spannungstransformationseinrichtung zur Bereitstellung der benötigten Versorgungsspannungen aufweisen.

Um das Schraubmodul in einfacher Weise auch an unterschiedliche Hochleistungs-Feldbusse anpassen zu können, ist es von Vorteil, wenn gegebenenfalls die Interfaceeinrichtung für den Feldbus an der Messkarte angeordnet ist. Je nach eingesteckter Messkarte wird somit eine entsprechende Interfaceeinrichtung für das erwünschte Feldbussystem bereitgestellt.

Um weitere Topologien, wie Stern- und Baumtopologien bei der Anordnung von Schraubmodulen relativ zur Stationssteuereinrichtung zu ermöglichen, kann zwischen Stationssteuereinrichtung und Schraubmodulen eine Busverstärkungseinrichtung geschaltet sein.

Die Daten zwischen insbesondere Schraubmodulen und Schraubern oder anderen mit den Schraubmodulen verbundenen Werkzeugen können analog oder digital übertragen werden. Die Verbindung kann dabei insbesondere durch eine Einkabel-Verbindungen zwischen Schraubmodul und Schrauber sowohl zur Spannungsversorgung als auch zur Übermittlung von Daten erfolgen. Dies gilt auch für die Übermittlung von Daten der Barcode-Lesegeräte, die vor Ort beim Schrauber angeordnet oder direkt am Schrauber befestigt sind. Die an den Schraubern vorgesehenen Meßwertaufnehmer und -wandler können dabei ebenfalls ihre Daten in digitalisierter Form abgeben.

Vorteilhafte Ausführungsbeispiele der Erfindung werden anhand der folgenden Figuren näher erläutert. Es zeigen:
- Fig. 1: ein Schraubsystem nach Stand der Technik;
- Fig. 2: eine Prinzipdarstellung eines erfindungsgemäßen Schraubsystems mit Stationssteuereinrichtung und Schraubmodulen;

- Fig. 3: eine vergrößerte, perspektivische Ansicht eines Schraubmoduls;
- Fig. 4: eine Prinzipdarstellung eines Blockschaltplans des Schraubmoduls nach Fig. 3, und
- Fig. 5: eine Mehrzahl von Schraubmodulen mit Stationssteuereinrichtung in einem Schaltschrank.

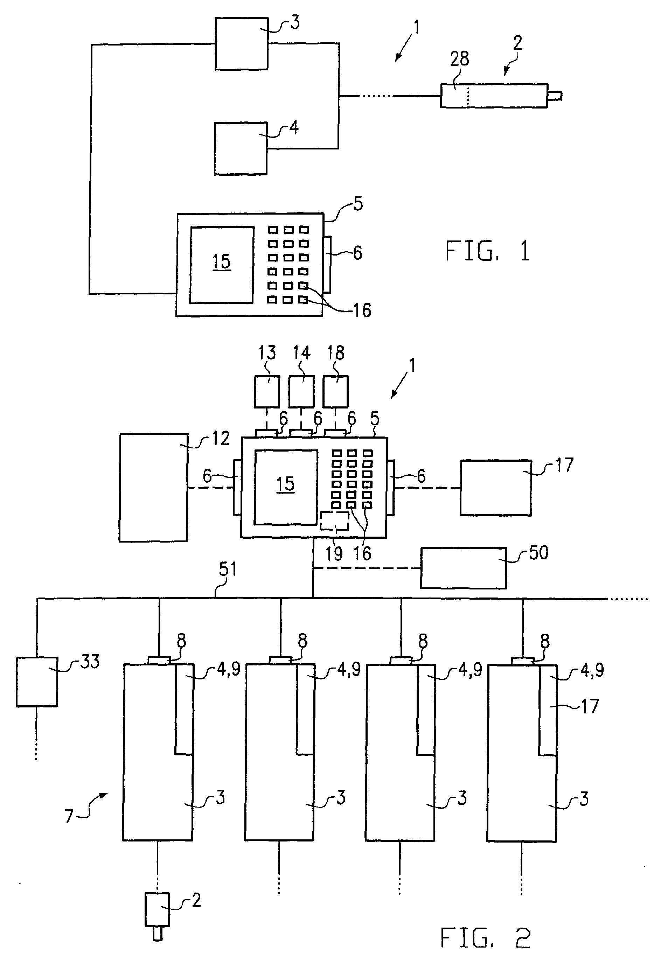

Nach Fig. 1 weist ein bekanntes Schraubsystem einen Schrauber 2 mit Antriebseinrichtung 28 auf, der über entsprechende Daten- und Versorgungsleitungen mit einer Motorsteuereinrichtung 3 und einer separaten Messeinrichtung 4 verbunden ist. Diese sind mit einer Stationssteuereinrichtung 5 verbunden. Diese weist zumindest eine Tastatur 16 und einen Bildschirm 15 als Anzeigeeinrichtung auf. Weiterhin ist die Stationssteuereinrichtung 5 über eine Interfaceeinrichtung 6 mit einer übergeordneten Steuereinrichtung oder einem Computer zur Programmierung und/oder Datenaustausch verbindbar

Bei einem erfindungsgemäßen Ausführungsbeispiel der Fig. 2 sind eine Vielzahl von Schraubern 2 mit jeweils einem zugeordneten Schraubmodul 7 verbunden. Zur Vereinfachung ist nur ein Schrauber 2 in Fig. 1 dargestellt. Das Schraubmodul 7 umfasst Motorsteuereinrichtung 3 und Messeinrichtung 4. Die Messeinrichtung 4 ist als in das Schraubmodul 7 einsteckbare Messkarte 9 ausgebildet. Über eine Interfaceeinrichtung 8 des Schraubmoduls 7 erfolgt eine Verbindung mit der Stationssteuereinrichtung 5 des Schraubsystems 1 über einen Hochgeschwindigkeits-Feldbus 51.

Bei dem dargestellten Ausführungsbeispiel sind vier Schraubmodule 7 angeordnet, wobei in der Regel für eine Station bis zu 32 oder auch mehr Schraubmodule eingesetzt und mit der entsprechenden Stationssteuereinrichtung 5 über den Feldbus 51 verbunden sind.

Zum Anschluss weiterer Schraubmodule 7 kann zwischen Stationssteuereinrichtung 5 und den Schraubmodulen eine Busverstärkungseinrichtung 50 angeordnet sein. Diese erlaubt neben einer Linientopologie zur Anordnung der Schraubmodule 7 auch Sternoder Baumtopologien.

Zum Ankoppeln von frei konfigurierbaren, digitalen Ein-/Ausgängen, eines weiteren Netzwerks oder dgl. ist der Hochgeschwindigkeits-Feldbus 51 mit einer Busankoppeleinrichtung 33 verbunden. An diese schließen sich die Ein-/Ausgänge oder weitere Netzwerke an.

Die Stationssteuereinrichtung 5 weist einen berührungsempfindlichen Bildschirm 15 (Touch-screen) und eine Tastatur 16 auf. Die Tastatur kann übliche alphanumerische Tasten und Funktionstasten umfassen, die gegebenenfalls in ihrer Funktion programmierbar sind. Auf dem Touch-screen sind sogenannte Icons zur Auswahl bestimmter Funktionen, Programme oder dgl. von Stationssteuereinrichtung 5, Schraubmodulen 7 oder auch Schraubern 2 abrufbar. Weitere Icons können Systemeinstellungen, Wartungsfunktionen, eine On-line-Hilfe oder dgl. betreffen.

Zur Speicherung einer Diagnose-Software, einer Standard-Software bezüglich aller gängigen Drehmoment-, Drehwinkel- und Streckgrenzschraubverfahren, zur Auswahl verschiedenster Anzugsverfahren durch den Schrauber oder dgl. sind entsprechende Programme in einem Speicherelemente 19 der Stationssteuereinrichtung 5 abspeicherbar.

Zum Datenaustausch und zur Programmierung der Stationssteuereinrichtung 5 ist diese über verschiedene Interfaceeinrichtungen 6 mit beispielsweise einem Computer 12, einer Maus 13, einem Strichcode-Lesegerät 14, einem Drucker 18, einer Kamera oder dgl. verbindbar. Über den Computer 12 kann beispielsweise eine Initialisierung der Stationssteuereinrichtung 5 und damit des Schraubsystems 1 erfolgen. Durch die Maus 13 kann eine grafische Benutzeroberfläche der Stationssteuereinrichtung 5 zur Auswahl verschiedenster Menüs oder Funktionen betätigt werden. Über den Drucker 18 sind beispielsweise der Bildschirminhalt, Daten von Schraubergebnissen, grafische Darstellungen von Drehmoment, Gradient oder dgl. und auch Statistikauswertungen ausdruckbar.

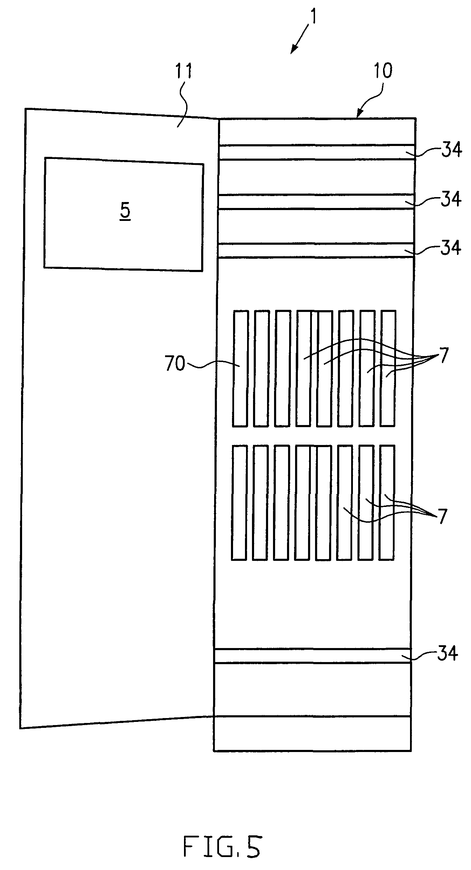

Bei einem weiteren Ausführungsbeispiel des erfindungsgemäßen Schraubsystems weist die Stationssteuereinrichtung 5 wenigstens ein Steuermodul 70, siehe Figur 5, und eine mit diesem verbundene Programmierungseinrichtung mit Bildschirm auf. In diesem Fall sind die Funktionen des Steuergerätes nach Figur 2 auf Steuermodul und Programmierungseinrichtung aufgeteilt. Das Steuermodul kann, siehe Figur 5, mit im Schaltschrank 10 angeordnet sein, wobei das Steuermodul insbesondere Steuer- und Kommunikationsaufgaben übernimmt. Die Programmierungseinrichtung dient zur Bedienung und Programmierung des Steuermoduls und mittels ihres Bildschirms zur Prozessvisualisierung. Der Aufbau des Steuermoduls 70 ist zumindest vom mechanischen Aufbau ähnlich zu dem der entsprechenden Schraubmodule, siehe die folgende Beschreibung. In dem Ausführungsbeispiel nach Figur 2 würde in diesem Zusammenhang die dort dargestellte Stationssteuereinrichtung 5 durch ein Steuermodul 70 mit angeschlossenem Computer ersetzt, wobei das Steuermodul über entsprechende Interfaces zum Anschluss der verschiedenen Einrichtungen 12, 13, 14, 17, 18, 50 nach Figur 2 verfügt.

In der Stationssteuereinrichtung 5 kann ein Eingabegerät 17 für mobile Datenträger, wie beispielsweise ein Disketten- oder CD-Laufwerk integriert oder über eine weitere Interfaceeinrichtung 6 mit diesem verbunden werden. Ein Strichcode-Lesegerät kann auch direkt an das Schraubmodul angeschlossen werden.

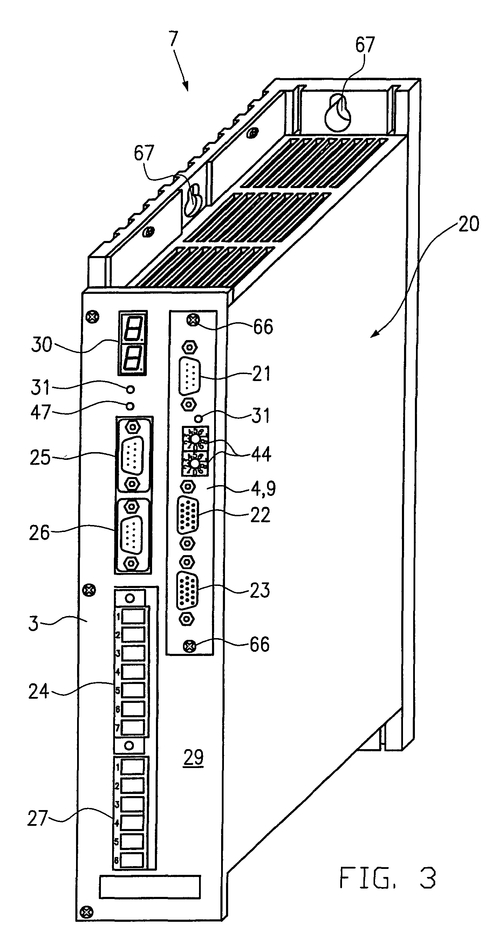

In Fig. 3 ist eine perspektivische Ansicht eines Schraubmoduls 7 nach Fig. 1 von schräg vome und oben dargestellt. Die Schraubmodule 7 sind in der Regel einem Schrauber 2 zugeordnet, s. Fig. 1, und weisen für alle Schrauber gleiche Abmessungen auf. Das Schraubmodul 7 enthält in einem Modulgehäuse 20 aus Metall die Motorsteuereinrichtung 3 und die Messeinrichtung 4 als einsteckbare Messkarte 9. Alle Anschlüsse für das Schraubmodul sind auf einer Frontseite 29 angeordnet. Eine Vielzahl von Schraubmodulen 7 ist direkt nebeneinander anord- und miteinander verbindbar oder beispielsweise in einem Schaltschrank 10, s. auch Fig. 5, mittels entsprechender Schlüssellöcher 67 lösbar befestigt.

Die Messkarte 9 ist in Fig. 3 vollständig in das Modulgehäuse 20 eingeschoben und dort mittels Schrauben 66 lösbar befestigt. Die Messkarte 9 weist einen Anschluss 21 für den Hochgeschwindigkeits-Feldbus 51 auf, s. Fig. 1, wobei der Anschluss 21 der Interfaceeinrichtung 8 aus Fig. 1 entspricht. In dem dargestellten Ausführungsbeispiel dient der Anschluss 21 zur Verbindung mit einem seriellen Hochgeschwindigkeits-Feldbus. Die Messkarte 9 ist durch weitere Anschlüsse 21 für andere Netzwerkanbindungen aller gängigen Netzwerk- oder Bussysteme umrüstbar.

Unterhalb des Feldbus-Anschlusses 21 ist eine LED-Leuchte als Anzeigeelement 31 angeordnet. Diese dient zur Darstellung einer Busaktivität.

Zur Identifizierung des Schraubmoduls 7 durch eine spezifische Adresse über den Feldbus sind Adressiereinrichtungen 44 angeordnet. Diese sind beispielsweise durch zwei BCD-Codierschalter gebildet, von denen einer für die Zehnerstelle und der andere für die Einerstelle verwendet wird.

Weiterhin weist die Messkarte 9 zwei Anschlüsse 22, 23 für Messwertaufnehmer auf, die im entsprechenden Schrauber angeordnet sind. Der Anschluss 22 dient beispielsweise als steuernder Aufnehmer und ist mit einem Drehmoment-Messwertaufnehmer im Schrauber verbunden. Der zweite Anschluss 23 dient als Gegenmessaufnehmer in Redundanz zum Anschluss 22.

In der Frontseite 29 des Schraubmoduls 7 sind weiterhin eine Anzeigeeinrichtung 30 in Form eines zweistelligen Sieben-Segmentdisplays sowie eine weitere LED-Leuchte als Anzeigeelement 31 und eine Rücksetz-Taste 47 angeordnet. Die Anzeigeeinrichtung 30 dient zur Anzeige codierter Fehlermeldungen oder auch zur Anzeige weiterer Meldungen des Schraubmoduls 7 bzw. des angeschlossenen Schraubers.

Die LED-Leuchte 31 dient beispielsweise zur Kennzeichnung einer Betriebsbereitschaft des Schraubmoduls und die unterhalb dieses Anzeigeelements angeordnete Taste 47 dient zum Rücksetzen des Systems.

Weitere Anschlüsse 25 und 26 dienen als zusätzliche Schnittstelle, beispielsweise RS 232-Schnittstelle, und zum Anschluss eines Resolvers des Schraubers, um eine Information über die Motorposition des Schraubers zu erhalten.

Schließlich sind noch Anschlüsse 24 und 27 für die Antriebseinrichtung des Schraubers sowie zur Spannungsversorgung des Schraubmoduls 7 vorgesehen.

Die verschiedenen Anschlüsse können steckercodiert sein, um insbesondere ein fehlerhaftes Einstecken einer Spannungsversorgung in den Antriebseinrichtungsanschluss 24 zu verhindern.

Es ist auch möglich, dass die Motoren über elektrische Kenngrößen direkt erkannt und vom Schraubmodul selbständig richtig betrieben werden.

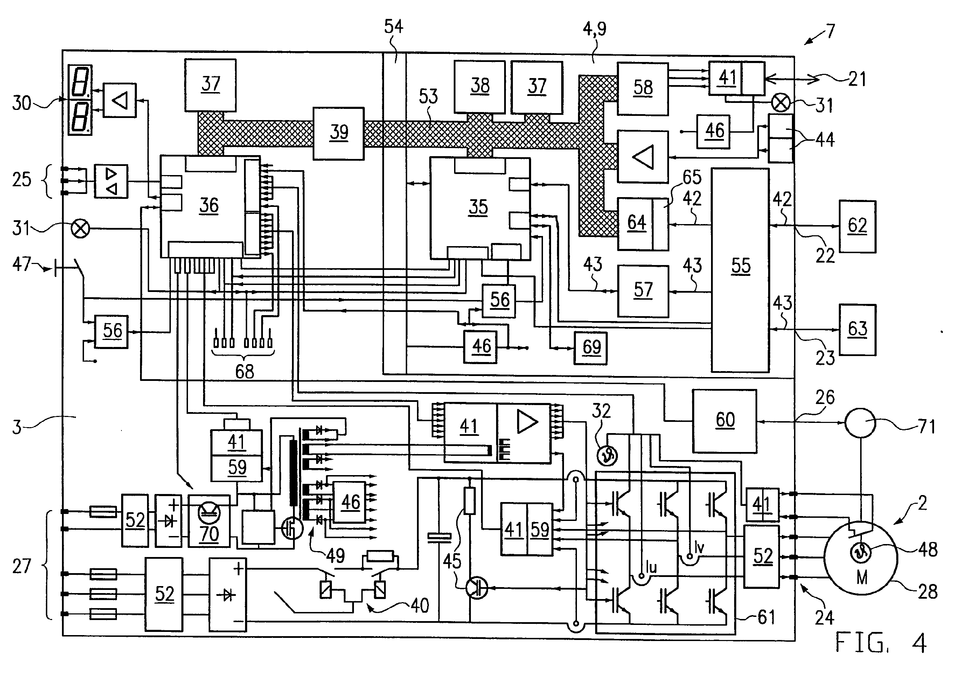

Fig. 4 zeigt ein Blockschaltdiagramm oder -plan des Schraubmoduls 7. Gleiche Bezugszeichen kennzeichnen gleiche Teile und werden nur noch teilweise erwähnt.

In Fig. 4 sind die entsprechenden Anschlüsse des Schraubmoduls 7 zur Vereinfachung rechts und links vom Schraubmodul dargestellt. Die Anzeigeeinrichtung 30 ist mit einer ersten Prozessoreinrichtung 36 verschaltet. Diese Prozessoreinrichtung ist hauptsächlich für die Motorsteuereinrichtung 3 zuständig. Sie ist weiterhin mit dem Anzeigeelement 31, der Rücksetztaste 47, einem Adress-/Datenbus 53 sowie einer Spannungsbegrenzungs-Einrichtung 71, einer galvanischen Trenneinrichtung 41, einem Resolverauswerte- und Überwachungsbauteil 60 sowie über eine Reihe von Leistungen mit der zweiten Prozessoreinrichtung 35 verbunden. Letztere ist auf der Messkarte 9 angeordnet und die Prozessoreinrichtung für die Messeinrichtung 4.

Zwischen Rücksetztaste 47 und erster Prozessoreinrichtung 36 ist ein Reset-Steuerelement 56 angeordnet, das wie alle übrigen spannungsversorgten Bauteile des Schraubmoduls 7 von einer Spannungstransformationseinrichtung 49 mit nachgeschalteter Spannungsregeleinrichtung 46 versorgt wird. Die Spannungstransformationseinrichtung 49 erzeugt aus der über den Netzanschluss 27 zugeführten Versorgungsspannung nach Filterung im Filter 52 und Spannungsbegrenzung durch Einrichtung 71 beispielsweise die Versorgungsspannung für den Feldbus, für den Reset-Schalter, für die Signalaufbereitung, für Bauteil 60 und dgl. Zur Spannungsversorgung der Antriebseinrichtung 28 des Schraubers über den entsprechenden Anschluss 24 wird im dargestellten Ausführungsbeispiel eine dreiphasige Spannungsversorgung bereitgestellt. Diese ist über einen Filter 52 und eine Einschaltstrombegrenzungs-Einrichtung 40 mit zwei Relais und einem den Einschaltstrom begrenzenden Widerstand an eine Spannungsbegrenzungseinrichtung 45 und nachfolgend an eine IGBT-Endstufe 61 übermittelbar. Der weitere Spannungsbegrenzer 71 ist der Spannungstransformationseinrichtung 49 sowie der galvanischen Trenneinrichtung 41 mit Bauelement 59 zur Ermittlung eines Spannungsversorgungsfehlers zugeordnet.

Zwischen Spannungstransformationseinrichtung 49 und IGBT-Endstufe 61 ist eine weitere galvanische Trenneinrichtung 41 angeordnet. Eine noch weitere galvanische Trenneinrichtung 41 ist zwischen Anschluss 24 und IGBT-Endstufe 61 neben einem Filter 52 angeordnet.

Um die Temperatur in der Motorsteuereinrichtung 3 und insbesondere im Bereich der Endstufe 61 kontrollieren zu können, ist ein Temperatursensor 32 angeordnet.

Ein weiterer Temperatursensor 48 ist der Antriebseinrichtung 28 des Schraubers 2 zugeordnet. Dieser Sensor übermittelt seine Signale an die galvanische Trenneinrichtung 41 und von dort weiter zur ersten Prozessoreinrichtung 36. Diese Prozessoreinrichtung ist außerdem mit Test-Pins 68 verschaltet, um gewisse Testfunktionen abzurufen.

Über den Adress-/Datenbus 53 erfolgt eine Übermittlung von Daten zwischen erster Prozessoreinrichtung 36 und zweiter Prozessoreinrichtung 35. Die erste Prozessoreinrichtung 36 ist weiterhin über den Bus 53 mit einer Speichereinrichtung 37 in Form eines Flash-Memory verbunden. Eine Zwischenspeicherung der über den Bus 53 ausgetauschten Daten kann mittels der Speichereinrichtung 39 erfolgen, die vorzugsweise als Dual-Port RAM ausgebildet ist. Eine weitere Speichereinrichtung 37 in Form eines Flash-Memory ist der zweiten Prozessoreinrichtung 35 ebenso wie ein SRAM als noch weitere Speichereinrichtung 38 zugeordnet.

Die Messkarte 9 ist innerhalb des Schraubmoduls 7 über eine Busplatine 54 mit dem Bus 53 innerhalb des Schraubmoduls 7 sowie entsprechenden Spannungsversorgungen (nicht dargestellt) von der Spannungstransformationseinrichtung 49 verbunden. Die Messkarte 9 weist dabei eine separate Spannungsregeleinrichtung 46 auf, die sowohl ein Reset-Steuerelement 56 als auch die Signalaufbereitung 55 versorgt.

Die weitere Interfaceeinrichtung 25 ist mit der ersten Prozessoreinrichtung 36 verbunden und ein Druckerinterface 69 ist noch auf der Messkarte 9 vorgesehen. Der Anschluss 21 zum Hochgeschwindigkeits-Feldbus erfolgt über eine weitere galvanische Trenneinrichtung 41, die über ein Netzbus-Steuerbauteil 58 mit dem Adress-/Datenbus 53 verbunden ist. Direkt unterhalb des Anschlusses 21 für den Feldbus ist die Bustätigkeits-LED 31 angeordnet. Zur Identifizierung des Schraubmoduls 7 mit Messkarte 9 ist an letzterer die Adressiereinrichtung 44 in Form von zwei BCD-Schaltern für eine zweistellige Adresse ausgebildet.

Daten vom Schrauber 2 werden über die Anschlüsse 22, 23, 26 an die Messkarte 9 bzw. die Motorsteuereinrichtung 3 übermittelt. Ein erster Messwertaufnehmer 62 und ein weiterer Messwertaufnehmer 63 dienen zur Bestimmung des Drehmoments und des Drehwinkels in reduntanter Ausführung. Die entsprechenden Daten sind über Messkanäle 42, 43 separat an die zweite Prozessoreinrichtung 35 übermittelbar. Zwischen den Anschlüssen 22, 23 und der zweiten Prozessoreinrichtung 35 ist ein Signalaufbereitungsbauteil 55 angeordnet. Von diesem erfolgt eine Übermittlung der Drehmomentsignale an Multiplexer 65 mit nachgeschaltetem A/D-Wandler und die Übermittlung der Drehwinkelsignale über den zweiten Messkanal 43 an ein Winkelkontrollbauteil 57 und von dort an die zweite Prozessoreinrichtung 35.

Die Signale eines Resolvers 71 werden über Anschluss 26 an das Resolverauswerte- und -überwachungsbauteil 60 und von dort ebenfalls an die erste Prozessoreinrichtung 36 übermittelt.

In Fig. 5 ist ein Ausführungsbeispiel des erfindungsgemäßen Schraubsystems 1 dargestellt, bei dem eine Vielzahl (sechzehn) von Schraubmodulen 7 in einem Schaltschrank 10 befestigt sind. Alle Schraub- und Steuermodule 7, 70 weisen gleiche Abmessungen und ein gleiches Gehäuse auf, wobei sich die Schraubmodule hardwaremäßig gegebenenfalls in der Messkarte 9, s. Fig. 1, beziehungsweise in der IGBT-Endstufe 61, siehe Figur 4, unterscheiden. Die Befestigung der Schraubmodule 7 erfolgt an einer verzinkten Montageplatte an einer Rückwand des Schaltschrankes 10 über Schlüssellöcher 67, s. Fig. 3. Eine entsprechende Verbindung der einzelnen Schraubmodule 7 über den Hochgeschwindigkeits-Feldbus mit der Stationssteuereinrichtung 5 ist zur Vereinfachung nicht dargestellt. Bei dem dargestellten Ausführungsbeispiel ist die Stationssteuereinrichtung 5 in einer Tür 11 des Schaltschrankes 10 angeordnet und von einer Vorderseite der Tür 11 sind Bildschirm, Tastatur und weitere Anschlüsse der Stationssteuereinrichtung 5, s. Fig. 1, zugänglich.

Innerhalb des Schaltschranks sind Tragprofilschienen 34 angeordnet, an denen Verbindungsklemmen, Verteilereinrichtungen, Busankoppeleinrichtungen 33 (s. Fig. 1) oder andere weitere Einrichtungen des Schraubsystems lösbar befestigt und insbesondere aufschnappbar angeordnet sind.

Entsprechende Verbindungskabel zwischen dem jeweiligen Schraubmodul 7 und zugehörigem Schrauber 2 sind zur Vereinfachung in Fig. 5 nicht dargestellt.

## Patentansprüche

1. Schraubsystem (1) mit einer Vielzahl von Schraubern (2) und diesen jeweils zugeordneten, separaten Motorsteuer- und Messeinrichtungen (3, 4) sowie einer Stationssteuereinrichtung (5), die mit wenigstens Motorsteuer-, Mess- und einer Interfaceeinrichtung (3, 4, 8) verbunden ist, wobei jeder Schrauber (2) an seine Messeinrichtung (4) zumindest Drehmoment und/oder Drehwinkel entsprechende Signale übermittelt, **dadurch gekennzeichnet, dass** Motorsteuer- und Messeinrichtung (3, 4) in einem Schraubmodul (7) integriert sind, welches eine Interfaceeinrichtung (8) zur Verbindung zumindest mit der Stationssteuereinrichtung (5) aufweist.

2. Schraubsystem nach Anspruch 1, **dadurch gekennzeichnet, dass** die Messeinrichtung (4) eine in das Schraubmodul (7) einsteckbare Messkarte (9) ist.

3. Schraubsystem nach Anspruch 1 oder 2, **dadurch gekennzeichnet, dass** eine Mehrzahl von Schraubmodulen (7) in einem Schaltschrank (10) montierbar sind und diesem eine Stationssteuereinrichtung (5) zugeordnet ist.

4. Schraubsystem nach wenigstens einem der vorhergehenden Ansprüche, **dadurch gekennzeichnet, dass** die Stationssteuereinrichtung (3) in eine Tür (11) des Schaltschranks (10) integriert ist.

5. Schraubsystem nach wenigstens einem der vorhergehenden Ansprüche, **dadurch gekennzeichnet, dass** die Stationssteuereinrichtung (5) die wenigstens eine Interfaceeinrichtung (7) zum Anschluss eines Eingabe- und/oder Ausgabegerätes wie Computer (12), Maus (13), Strichcode-Lesegerät (14), Drucker (18) oder dgl. aufweist.

6. Schraubsystem nach wenigstens einem der vorangehenden Ansprüche, **dadurch gekennzeichnet, dass** die Stationssteuereinrichtung (5) wenigstens ein Steuermodul (70) und eine Programmierungseinrichtung mit Bildschirm aufweist.

7. Schraubsystem nach wenigstens einem der vorangehenden Ansprüche, **dadurch gekennzeichnet, dass** die Stationssteuereinrichtung (5) einen insbesondere berührungsempfindlichen Bildschirm (15) und/oder eine Tastatur (16) und/oder ein Eingabegerät (17) für mobile Datenträger aufweist.

8. Schraubsystem nach wenigstens einem der vorangehenden Ansprüche, **dadurch gekennzeichnet, dass** die Stationssteuereinrichtung (5) fest- und/oder wiederbeschreibbare Speicherelemente (19) aufweist.

9. Schraubsystem nach wenigstens einem der vorangehenden Ansprüche, **dadurch gekennzeichnet, dass** das Schraub- und/oder Steuermodul (7, 70) ein Modulgehäuse (20) aufweist, an dem zur Kommunikation mit der Stationsteuereinrichtung (5) und dem wenigstens einen zuortbaren Schrauber (2) Anschlüsse (21 - 27) für einen insbesondere seriellen Hochgeschwindigkeits-Feldbus sowie für Messwertaufnehmer und Antriebseinrichtung (28) des Schraubers (2) angeordnet sind.

10. Schraubsystem nach wenigstens einem der vorangegangenen Ansprüche, **dadurch gekennzeichnet, dass** alle insbesondere steckbaren Anschlüsse (21 bis 27) des Schraub- und/oder Steuermoduls (7, 70) an einer Frontseite (29) des Modulgehäuses (20) ausgebildet sind.

11. Schraubsystem nach wenigstens einem der vorangehenden Ansprüche, **dadurch gekennzeichnet, dass** das Schraub- und/oder Steuermodul (7,70) eine zumindest numerische Anzeigeeinrichtung (30) und/oder Anzeigeelemente (31) aufweist.

12. Schraubsystem nach wenigstens einem der vorangehenden Ansprüche, **dadurch gekennzeichnet, dass** das Schraub- und/oder Steuermodul (7, 70) einen Netzanschluss (27) und/oder einen Drei-Phasen-Versorgungsanschluss aufweist.

13. Schraubsystem nach wenigstens einem der vorangehenden Ansprüche, **dadurch gekennzeichnet, dass** Motorsteuer- und Messeinrichtungen (3, 4) im Schraubmodul (7) separat elektrisch versorgbar und/oder abschaltbar sind.

14. Schraubsystem nach wenigstens einem der vorangehenden Ansprüche, **dadurch gekennzeichnet, dass** das Schraub- und/oder Steuermodul (7, 70) einen Temperatursensor (32) im Modulgehäuse (20) aufweist.

15. Schraubsystem nach wenigstens einem der vorangehenden Ansprüche, **dadurch gekennzeichnet, dass** das Schraubsystem (1) wenigstens eine Busankoppeleinrichtung (33) aufweist.

16. Schraubsystem nach wenigstens einem der vorangehenden Ansprüche, **dadurch gekennzeichnet, dass** die Busankoppeleinrichtung (33) an einer den Schaltschrank (10) vorgesehenen Tragprofilschiene (34) anordbar und insbesondere aufschnappbar ist.

17. Schraubsystem nach wenigstens einem der vorangehenden Ansprüche, **dadurch gekennzeichnet, dass** die Busankoppeleinrichtung (33) alle Anschlüsse und/oder Anzeigeelemente und/oder Adressiereinrichtungen und/oder zumindest eine numerische Anzeigeeinrichtung auf einer der Tragprofilschiene (34) abgewandten Frontseite aufweist.

18. Schraubsystem nach wenigstens einem der vorangehenden Ansprüche, **dadurch gekennzeichnet, dass** das Schraubmodul (7) einen Anschluss (26) für einen Resolver insbesondere eines bürstenlosen Motors als Antriebseinrichtung (28) eines Schraubers (2) aufweist.

19. Schraubsystem nach wenigstens einem der vorangehenden Ansprüche, **dadurch gekennzeichnet, dass** das Schraubmodul (7) separate Prozessoreinrichtungen (37, 36) für Motorsteuer- und Messeinrichtung (3, 4) aufweist.

20. Schraubsystem nach wenigstens einem der vorangehenden Ansprüche, **dadurch gekennzeichnet, dass** die Motorsteuereinrichtung (3) eine digitale Motorregelung aufweist.

21. Schraubsystem nach wenigstens einem der vorangehenden Ansprüche, **dadurch gekennzeichnet, dass** Schraub- und/oder Steuermodul (7, 70) und/oder Messkarte (9) wenigstens eine Speichereinrichtung (37, 38, 39) aufweisen.

22. Schraubsystem nach wenigstens einem der vorangehenden Ansprüche, **dadurch gekennzeichnet, dass** alle Steckverbindungsanschlüsse (21 bis 27) und Gehäuseöffnungen des Schraub- und/oder Steuermoduls (7, 70) berührsicher ausgebildet sind.

23. Schraubsystem nach wenigstens einem der vorangehenden Ansprüche, **dadurch gekennzeichnet, dass** das Schraub- und/oder Steuermodul (7, 70) eine Einschaltstrombegrenzungs-Einrichtung (40) aufweist.

24. Schraubsystem nach wenigstens einem der vorangehenden Ansprüche, **dadurch gekennzeichnet, dass** Ausgangsstufen des Schraub- und/oder Steuermoduls (7, 70) relativ zu anderen Versorgungseinrichtungen des Schraubmoduls galvanisch getrennt sind.

25. Schraubsystem nach wenigstens einem der vorangehenden Ansprüche, **dadurch gekennzeichnet, dass** die Messeinrichtung (4) wenigstens zwei getrennte Messkanäle (42, 43) für Drehmoment- und Drehwinkelerfassung durch Messwertaufnehmer des Schraubers (2) aufweist.

26. Schraubsystem nach wenigstens einem der vorangehenden Ansprüche, **dadurch gekennzeichnet, dass** das Schraub- und/oder Steuermodul (7, 70) eine einstellbare Adressiereinrichtung (44) zur Identifizierung über den Feldbus (51) aufweist.

27. Schraubsystem nach wenigstens einem der vorangehenden Ansprüche, **dadurch gekennzeichnet, dass** zumindest die Motorsteuereinrichtung (3) eine Spannungsbegrenzungs- und/oder Spannungsregeleinrichtung (45, 46) aufweist.

28. Schraubsystem nach wenigstens einem der vorangehenden Ansprüche, **dadurch gekennzeichnet, dass** die Anschlüsse (21 bis 27) am Schraub- und/oder Steuermodul (7, 70) zumindest teilweise steckercodiert sind.

29. Schraubsystem nach wenigstens einem der vorangehenden Ansprüche, **dadurch gekennzeichnet, dass** am Schraub- und/oder Steuermodul (7, 70) eine Rücksetz-taste (47) angeordnet ist.

30. Schraubsystem nach wenigstens einem der vorangehenden Ansprüche, **dadurch gekennzeichnet, dass** dem Schrauber (2) und insbesondere dessen Antriebseinrichtung (28) wenigstens ein Temperatursensor (48) zugeordnet ist, dessen Signale an das Schraubmodul (7) übermittelbar sind.

31. Schraubsystem nach wenigstens einem der vorangehenden Ansprüche, **dadurch gekennzeichnet, dass** das Schraubmodul (7) eine temperaturabhängige Strom-/Drehmomentkompensations-Einrichtung aufweist.

32. Schraubsystem nach wenigstens einem der vorangehenden Ansprüche, **dadurch gekennzeichnet, dass** das Schraub- und/oder Steuermodul (7, 70) eine Spannungstransformations-Einrichtung (49) zur Bereitstellung der im Modul benötigten Versorgungsspannungen aufweist.

33. Schraubsystem nach wenigstens einem der vorangehenden Ansprüche, **dadurch gekennzeichnet, dass** die Interfaceeinrichtung (8) für den Feldbus (51) an der Messkarte (9) angeordnet ist.

34. Schraubsystem nach wenigstens einem der vorangehenden Ansprüche, **dadurch gekennzeichnet, dass** zwischen Stationssteuereinrichtung (5) und Schraubmodulen (7) eine Busverstärkungseinrichtung für insbesondere Stern- und Baumtopologien zur Anordnung der Schraubmodule geschaltet ist.

35. Schraubsystem nach wenigstens einem der vorangehenden Ansprüche, **dadurch gekennzeichnet, dass** der Datenaustausch im Schraubsystem digitalisiert ist und entsprechende digitale Ein- und Ausgänge an den Modulen (7, 70) und Schraubern (2) ausgebildet sind.

36. Schraubsystem nach wenigstens einem der vorangehenden Ansprüche, **dadurch gekennzeichnet, dass** die Übertragung zwischen zumindest Schraubmodul und Schrauber analog und/oder digital erfolgt und insbesondere Einkabel-Verbindungen vorgesehen sind.
